# EUROPEAN PATENT APPLICATION

(11) **EP 2 495 683 A1**
(43) Date of publication of application: **05.09.2012**
(21) Application number: 12156194.8
(22) Date of filing: 20.02.2012
(51) Int. Cl.: G06K 7/10, H04B 5/00

(54) **An electronic device with the function of supporting multiple cards**

(30) Priority: 01.03.2011 CN 201110051355; 31.03.2011 US 201113077034
(71) Applicant: O2 Micro, Inc., Santa Clara, CA 95054 (US)
(72) Inventor: Zhang, Weihua, 610041 Chengdu (CN); Wu, Cheng, 201203 Shanghai (CN); Li, Songlin, 518040 Shenzhen (CN); Cao, Guoliang, 610041 Chengdu (CN)
(74) Representative: Lippert, Stachow & Partner

(57) **Abstract**

An electronic system includes multiple I/O interfaces and a controller. The controller is coupled to multiple cards via multiple I/O interfaces respectively, and can select a card from multiple cards and perform a wireless communication to transfer data between the selected card and a target electronic device. The controller includes a configuration block and a core. The configuration block stores configuration data indicative of selecting which card.

The core is coupled to the configuration block and the cards and can enable the wireless communication.

## Description

### RELATED APPLICATIONS

This application claims priority to Patent Application No. 201110051355.X, entitled "An Electronic Device, System and Method for Transferring Data', filed an March 1, 2011, with the State Intellectual Property Office of the People's Republic of China.

### BACKGROUND

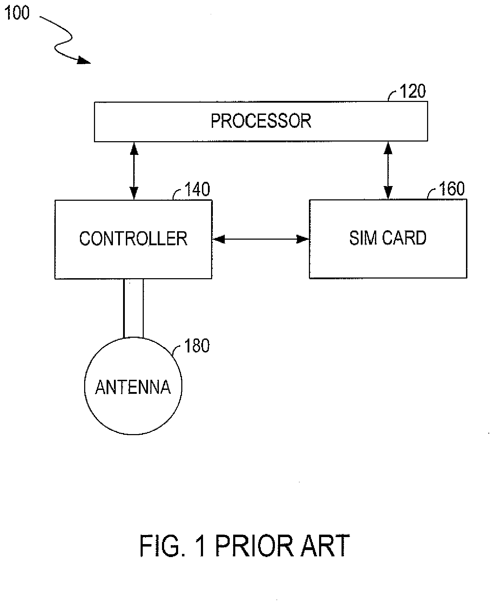

Mobile phones are widely used. FIG. 1 shows a conventional mobile phone 100. The mobile phone 100 includes a processor 120, a controller 140, a subscriber identity module (SIM) card 160, and an antenna 180. The antenna 180 can be used to receive information from a target electronic device, for example, a second mobile phone (not shown in FIG. 1). The controller 140 is coupled to the host 120, the antenna 180, and the SIM card 160. Typically, the controller 140 is used to perform wireless communication (e.g., near field communication (NFC)) to control data transfer between the second mobile phone arid the mobile phone 100. For example, the antenna 180 receives the data sent from the second mobile phone and the controller 140 can transfer the data to the SIM card 160 of the mobile phone 100.

The controller 140 is used for enabling data transfer between the SIM card 160 and the target electronic device. If the mobile phone 100 includes multiple SIM cards, multiple controllers are respectively allocated to the multiple SIM cards to enable the data transfer between these SIM cards and the target electronic device. Accordingly, the size and cost of the mobile phone 100 is increased.

### SUMMARY

In a first embodiment, an electronic system includes multiple I/O Interfaces and a controller. The controller is coupled to multiple cards via multiple I/O interfaces respectively, and can select a card from multiple cards and perform a wireless communication to transfer data between the selected card and a target electronic device. The controller includes a configuration block and a core. The configuration block stores configuration data indicative of selecting which card. The core is coupled to the configuration block and the cards and can enable the wireless communication. In a second embodiment, a controller for controlling data transfer between a source electronic device and a target electronic device comprises a configuration block operable for storing configuration data indicative of selecting a subscriber identity module (SIM) card from a plurality of SIM cards in said source electronic device; a core coupled to said configuration block and said SIM cards and operable for enabling a wireless communication between said selected SIM card and said target electronic device; and an interface selection block coupled to said core and said configuration block and operable for selecting an I/O Interface according to said configuration data to transfer data between said core and said selected SIM card via said selected I/O Interface.

### BRIEF DESCRIPTION OF THE DRAWINGS

Features and advantages of embodiments of the claimed subject matter will become apparent as the following detailed description proceeds, and upon reference to the drawings, wherein like numerals depict like parts, and in which:

FIG. 1 shows a conventional mobile phone.

FIG. 2 shows an electronic device according to one embodiment of the present Invention.

FIG. 3 shows a controller of the electronic device in FIG. 2 according to one embodiment of the present invention.

FIG. 4 is a flowchart of a method for controlling data transfer between a source electronic device and a target electronic device according to one embodiment of the present invention.

### DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.

Embodiments described herein may be discussed in the general context of computer-executable instructions residing an some form of computer-usable medium, such as program modules, executed by one or more computers or other devices. Generally, program modules include routines, programs, objects, components, data structures, etc., that perform particular tasks or implement particular abstract data types. The functionality of the program modules may be combined or distributed as desired in various embodiments.

Same portions of the detailed descriptions which follow are presented in terms of procedures, logic blocks, processing and other symbolic representations of operations an data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient Labels applied to these quantities. Unless specifically stated otherwise as apparent from the following discussions, it is appreciated that throughout the present application, discussions utilizing the terms such as "accessing","selecting","transferring","sending","powering","setting"or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

By way of example, and not limitation, computer-usable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, random access memory (RAM), read only memory (ROM), electrically erasable programmable ROM (EEPROM), flash memory or other memory technology, compact disk ROM (CD-ROM), digital versatile disks (DVDs) or other optical storage, magnetic cassettes, magnetic tape, magnetic disk storage or other magnetic storage devices, or any other medium that can be used to store the desired information.

Communication media can embody computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, radio frequency (RF), infrared and other wireless media. Combinations of any of the above should also be included within the scope of computer-readable media.

Furthermore, in the following detailed description of the present invention, numerous specific details are set forth in order to provide a thorough understanding of the present invention. However, it will be recognized by one of ordinary skill in the art that the present Invention may be practiced without these specific details. In other instances, well known methods, procedures, components, and circuits have not been described in detail as not to unnecessarily obscure aspects of the present Invention.

Embodiments in accordance with the present Invention provide electronic devices for supporting multiple SIM cards. Advantageously, a controller in the electronic device can select a SIM card from multiple SIM cards and perform wireless communication to transfer data between the selected SIM card and a target electronic device. Thus, the electronic device can use only one controller to control data transfer between the SIM cards and the target electronic device. Therefore, the size and cost of the electronic device can be saved.

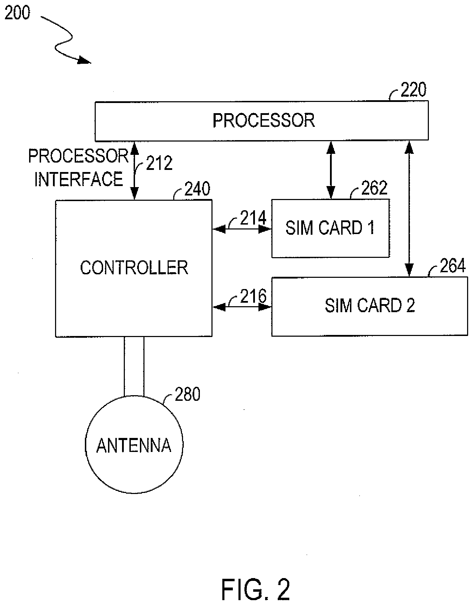

FIG. 2 shows an electronic device 200 according to one embodiment of the present Invention. In the example of FIG. 2, the electronic device 200 includes a processor 220, a controller 240, cards, e.g., SIM cards 262 and 264, interfaces 214 and 216, and an antenna 280. The electronic device 200 can be a computer, a mobile phone, a personal digital assistant (PDA), or the like. The interfaces 214 and 216 are couple to the SIM cards 262 and 264 respectively. Each of the interfaces 214 and 216 includes a signal interface and a power Interface, in one embodiment. The signal interface can be, but is not limited to, a single wire protocol (SWP) interface.

A target electronic device (not shown in FIG. 2) can communicate with the electronic device 200 via wireless communication, e.g., NFC. The target electronic device can be a computer, a mobile phone, a personal digital assistant (PDA), a mobile payment end, or the like. The target electronic device includes an antenna to enable the NFC with the controller 240. A distance between the electronic device 200 and the target electronic device is within a predetermined range for the NFC. Although two cards are shown in FIG. 2 for illustrative purposes, the present Invention is not so limited. In another embodiment, the electronic device 200 may include more than two cards.

Advantageously, the controller 240 can select a SIM card from the SIM cards 262 and 264 for an intended function, e.g., to exchange data with the target electronic device through NFC. in the embodiment of the target electronic device being a computer, mobile phone, PDA, or the Ike, the data can be, but is not limited to, contact information (e.g., phone number) or a file. In the embodiment of the target electronic device being a mobile payment end, the data can be, but is not limited to, payment of a purchasing item.

In one embodiment, the controller 240 selects the SIM card for an intended function according to control information sent from the processor 220. The processor 220 can send the control information to the controller 240 via a processor interface 212. The control information can enable the hand-shake between the processor 220 and the controller 240 before the data transfer between the selected SIM card and the target electronic device is initiated. The control information can include configuration data indicative of selecting which SIM card from the SIM cards 262 and 264 for an intended function. The controller 240 can select the SIM card accordingly and enable the data exchange between the selected SIM card and the target electronic device.

The configuration data can be set/determined by a user, in one embodiment. For example, the user can set the configuration data via a touch screen or key board of the electronic device 200. In response, the processor 220 sends the controller 240 the configuration data indicative of selecting which SIM card for the intended function.

In one embodiment, in addition to indicating which SIM card is selected for the intended function, the configuration data indicates operation statuses of the SIM cards, e.g., a standby (active) status or an inactive status. In one embodiment, a SIM card in the standby status receives power such that the SIM card is ready to perform functions, e.g., to exchange data with the target electronic device through NFC. In one embodiment, no power is provided to a SIM card in the inactive status, which is inactive for functions. As such, when one of the SIM cards is activated to standby and selected for the intended function at any one time, the remaining cards can be activated or inactivated based upon the configuration data.

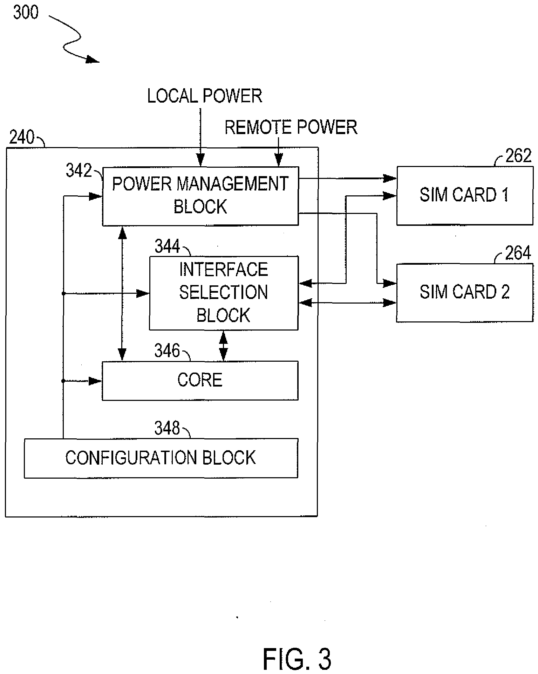

Moreover, the controller 240 can switch between a first power mode and a second power mode to power the SIM cards based upon a power status of the electronic device 200. In one embodiment, the controller 240 receives local power in the first power mode and receives remote power via the antenna 280 in the second power mode, which is further described in relation to FIG. 3.

FIG. 3 shows the controller 240 of the electronic device 200 according to one embodiment of the present Invention. Elements labeled the same as in FIG. 2 have similar functions. FIG. 3 is described in combination with FIG. 2. In the example of FIG. 3, the controller 240 includes a power management block 342, an interface selection block 344, a core 346, and a configuration block 348.

The configuration block 348 stores the configuration data sent from the processor 220 in FIG. 2. As described above, the configuration data can indicate which SIM card is selected from the SIM cards 262 and 264 for an intended function and can further indicate the Operation statuses of the SIM cards.

The power interface in the interface 214 and the power interface in the interface 216 as described in FIG. 2 can couple the power management block 342 to the SIM cards 262 and 264, respectively. The power management block 342 powers the standby SIM cards based upon the configuration data in the configuration block 348. In one embodiment, the power management block 342 receives input power, converts the input power to output power and powers the standby SIM cards by the output power. In one embodiment, the Input power is provided by the power source, e.g., battery, inside the electronic device 200 when the electronic device 200 is powered on. In this instance, the input power is provided internally by the electronic device 200 and is referred to as the local power. In another embodiment, the Input power is provided by the target electronic device when the electronic device 200 is powered off/runs out of power. More specifically, when the target electronic device is within a predetermined range of the electronic device 200, the antenna 280 coupled to the controller 240 can receive power transmitted by the target electronic device, e.g., through an antenna. In this instance, the input power is provided externally by the target electronic device and is referred to as the remote power.

The signal interface in the interface 214 and the signal interface in the Interface 216 as described in FIG. 2 couple the interface selection block 344 to the SIM cards 262 and 264, respectively. The interface selection block 344 selects the corresponding interface according to the configuration data in the configuration block 348 to transfer data between the core 346 and the selected SIM card via the selected interface.

The core 346 coupled to the configuration block 348, the power management block 342 and the SIM cards 262 and 264 can perform wireless communication (e.g., NFC) to exchange data with the target electronic device via the antenna 280 in FIG. 2. Thus, data can be transferred between the selected SIM card and the target electronic device. In one embodiment, the core 346 is powered by the power management block 342.

Advantageously, one controller is used to control data transfer between multiple SIM cards and the target electronic device, and thus the size and cost of the electronic device 200 can be reduced.

Furthermore, when the electronic device 200 is power off/runs out of power, data transfer between the SIM cards in the electronic device 200 and the target electronic device can still be conducted. Therefore, it's more user-friendly in some situations. For example, when the electronic device 200 runs out of power and the user has to make a phone call, the controller 240 receives the remote power from the target electronic device, powers the SIM card which stores the phone number for the phone call, and connects to the target electronic device through NFC. The user can use the target electronic device to make the phone call accordingly.

More specifically, when the electronic device 200 runs out of power, the power management block 342 converts the remote power to output power and provides the output power to the SIM card selected for the NFC function (e.g., the SEM card 262) according to the configuration data in the configuration block 348. The interface selection block 344 selects the corresponding interface according to the configuration data. The core 346 can perform the NFC to transfer data between the SIM card 262 and the target electronic device.

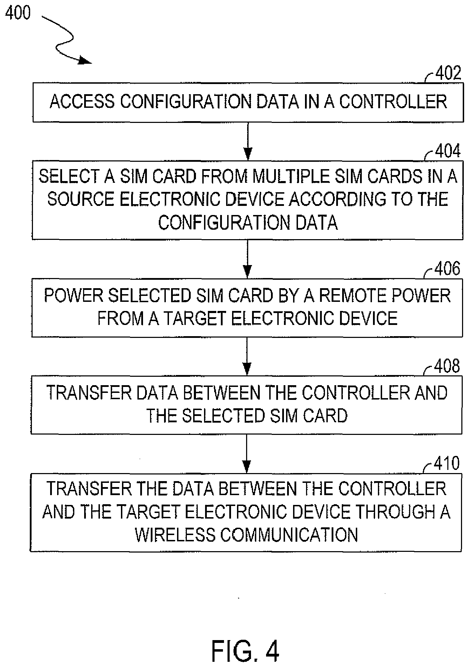

FIG. 4 shows a flowchart 400 of a method for controlling data transfer between a source electronic device, e.g., the electronic device 200, and a target electronic device according to one embodiment of the present Invention. FIG. 4 is described in combination with FIG. 2 and FIG. 3.

In block 402, the interface selection block 344 can access the configuration data stored in the configuration block 348 in the controller 240. The configuration data is indicative of selecting which SIM card from the SIM cards 262 and 264 for an intended function and is sent from the processor 220.

In block 404, the interface selection block 344 can select a SIM card from the SIM cards 262 and 264 according to the configuration data. More specifically, the Interface selection block 344 selects the corresponding interface coupled to selected SIM card according to the configuration data.

In block 406, the selected SIM card is powered by remote power from the target electronic device. More specifically, when the electronic device 200 runs out of power, the power management block 342 converts the remote power to output power and provides the output power to the selected SIM card according to the configuration data. The remote power is provided externally by the target electronic device as described in relation to FIG. 3.

In block 408, data can be transferred between the selected SIM card and the core 346 in the controller 240 via selected Interface. In block 410, the core 346 can perform a wireless communication (e.g., NFC) to transfer the data between the core 346 in the controller 240 and the target electronic device. Thus, the data can be transferred between the selected SIM card in the electronic device 200 and the target electronic device.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the Invention may be used with many notifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. An electronic device comprising:
a plurality of input/output (I/O) interfaces; and
a controller coupled to a plurality of cards via said I/O interfaces and operable for selecting a card from said cards and for performing a wireless communication to transfer data between selected card and a target electronic device, wherein said controller comprises:
a configuration block operable for storing configuration data indicative of said selecting; and
a core coupled to said configuration block and said cards and
operable for enabling said wireless communication.

2. The electronic device of claim 1, wherein a distance between said electronic device and said target electronic device is within a predetermined range for said wireless communication.

3. The electronic device of claim 1 or 2, wherein said electronic device comprises a mobile phone, and wherein said cards comprise a subscriber identity module (SIM) card.

4. The electronic device of claim 1, 2 or 3, wherein said wireless communication comprises near field communication (NFC) over a predetermined range.

5. The electronic device of anyone of claims 1 to 4, further comprising:
a processor operable for providing said configuration data; and
a second I/O interface coupled to said controller and said processor and operable for transferring said configuration data between said controller and said processor.

6. The electronic device of anyone of claims 1 to 5, wherein said controller further comprises an interface selection block coupled to said core and said configuration block and operable for selecting an I/O interface from said I/O interfaces to transfer said data between said core and said selected card.

7. The electronic device of anyone of claims 1 to 6, wherein said controller switches between a first power mode and a second power mode to power said selected card based upon a power status of said electronic device.

8. The electronic system of claim 7, wherein said controller receives local power from said electronic device in said first power mode and receives remote power from said target electronic device in said second power mode.

9. The electronic device of claim 8, wherein said controller further comprises a power management block configured to convert input power selected from said local power and said remote power to output power, and configured to power said selected card by said output power.

10. The electronic device of anyone of claims 1 to 9, wherein said configuration data indicates operation statuses of said cards, and wherein said operation statuses comprise a standby status and an inactive status.

11. The electronic device of anyone of claims 1 to 10, wherein said I/O interfaces comprise a signal wire protocol (SWP) Interface.

12. A method for controlling data transfer between a source electronic device and a target electronic device, said method comprising:
accessing configuration data in a controller;
selecting a subscriber identity module (SIM) card from a plurality of SIM cards in said source electronic device according to said configuration data;
powering selected SIM card by remote power from said target electronic device;
transferring data between said controller and said selected SIM card; and
transferring said data between said controller and said target electronic device through a wireless communication.

13. The method of claim 12, further comprising:
sending said configuration data from a processor of said source electronic device.

14. The method of claim 12 or 13, further comprising:
setting operation statuses of said SIM cards based upon said configuration data, wherein said operation statuses comprises a standby status and an inactive status.

15. The method of claim 12, 13 or 14, wherein said transferring data between said controller and said selected SIM card comprises:
transferring said data between said controller and said selected SIM card via a signal wire protocol (SWP) interface.
